# EUROPÄISCHE PATENTSCHRIFT

(11) **EP 2 029 793 B1**
(45) Veröffentlichungstag und Bekanntmachung des Hinweises auf die Patenterteilung: **16.09.2009**
(21) Anmeldenummer: 07785539.3
(22) Anmeldetag: 19.06.2007
(51) Int. Cl.: C23C 18/02, F24J 2/48

(54) **VERFAHREN ZUR HERSTELLUNG EINER ABSORBERBESCHICHTUNG AUF SOL-GEL-BASIS FÜR DIE SOLARTHERMIE**
PROCESS FOR PRODUCING A SOL-GEL-BASED ABSORBER COATING FOR SOLAR HEATING
PROCÉDÉ DE FABRICATION D'UN REVÊTEMENT ABSORBANT SUR UNE BASE SOL-GEL POUR LA THERMIE SOLAIRE

(30) Priorität: 21.06.2006 DE 102006028429
(43) Veröffentlichungstag der Anmeldung: 04.03.2009
(73) Patentinhaber: ZYRUS Beteiligungsgesellschaft mbH & Co. Patente I KG, 12529 Schönefeld / OT Waltersdorf (DE)
(72) Erfinder: ES-SOUNI, Mohammed, 24247 Mielkendorf (DE)
(74) Vertreter: Zech, Stefan Markus
(86) Internationale Anmeldenummer: PCT/DE2007/001090
(87) Internationale Veröffentlichungsnummer: WO 2007/147399

(56) Entgegenhaltungen:
- WO-A-96/37739
- WO-A-97/38145
- US-A- 5 912 045
- CHAO HE ET AL: "Influence of silver doping on the photocatalytic activity of titania films" APPLIED SURFACE SCIENCE, ELSEVIER, AMSTERDAM, NL, Bd. 200, Nr. 1, 15. November 2002 (2002-11-15), Seiten 239-247, XP002376567 ISSN: 0169-4332
- LIZHI ZHANG ET AL: "Ambient light reduction strategy to synthesize silver nanoparticles and silver-coated TiO2 with enhanced photocatalytic and bactericidal activities" LANGMUIR, ACS, WASHINGTON, DC, US, Bd. 19, 21. Oktober 2003 (2003-10-21), Seiten 10372-10380, XP002437601 ISSN: 0743-7463
- TRAVERSA E ET AL: "SOL-GEL PREPARATION AND CHARACTERIZATION OF AG-TIO2 NANOCOMPOSITE THIN FILMS" JOURNAL OF SOL-GEL SCIENCE AND TECHNOLOGY, SPRINGER, NEW YORK, NY, US, Bd. 19, Nr. 1-3, 1. Dezember 2000 (2000-12-01), Seiten 733-736, XP001001869 ISSN: 0928-0707

## Beschreibung

Die Erfindung betrifft ein Verfahren zur Herstellung einer Absorberbeschichtung für die - Solarthermie, das auf einem Sol-Gel-Verfahren beruht und mit dem Schichten auf weitgehend beliebige Substrate aufgebracht werden können.

Solarkollektoren nutzen die einfallende Sonnenstrahlung durch Absorption sichtbaren Lichts und Umwandlung dieser elektromagnetischen Energie in Wärme. Diese wird generell an ein wärmespeichemdes, fließfähiges Medium abgegeben und durch den Fluss einem Speicherreservoir zugeführt. Solarkollektorflächen bestehen typisch aus beschichteten Kupfer- oder Aluminiumblechen, die mit Rohrleitungen verschweißt sind, um einen guten Wärmetransport in das in den Rohren geführte Speichermedium zu sichern.

Die letzten Endes erzielbare Nutzwärme hängt wesentlich vom Absorptionsvermögen der Kollektorbeschichtung ab, welches idealerweise für Licht im gesamten solaren Spektrum hoch sein muss. Die so gewonnene Wärme darf jedoch zugleich nicht übermäßig im Infrarotspektrum wieder emittiert werden. Man fordert von der Beschichtung deshalb zusätzlich ein geringes Emissionsvermögen im Wellenlängenbereich oberhalb von etwa 2000 Nanometer, welches mit einer hohen Reflektivität in diesem Spektralbereich einhergeht.

Absorberbeschichtungen, die den genannten Anforderungen entsprechen, sind bereits kommerziell erhältlich und werden als selektiv bezeichnet. Die großflächige Herstellung ist in hoch optimierten Beschichtungsanlagen etwa mittels Physical Vapour Deposition (PVD) z.B. auf durchlaufenden Kupfer-Bändern möglich, wobei sich beschichtete Flächen von etlichen Quadratmeter pro Stunde erzielen lassen. Weiterhin sind Sputter-Verfahren und auch ein kombiniertes CVD/Sputter-Verfahren bekannt. Allerdings handelt es sich hierbei um Hochvakuum-Prozesse mit erheblichem apparativen Aufwand. Für weitere Informationen sei an dieser Stelle auf die Publikation *BINE projektinfo 5*/*99* des BINE Informationsdienstes herausgegeben vom Fachinformationszentrum Karlsruhe verwiesen.

Robuste, fest haftende, thermisch und chemisch langzeitstabile Beschichtungen lassen sich bekanntlich auch durch Sol-Gel-Beschichtungsverfahren erzeugen. Die Vorteile solcher Verfahren liegen neben den geringen Anforderungen an Equipment und Prozesskontrolle in der hohen Variabilität der verwendbaren Materialien hinsichtlich Zusammensetzung und Schichtstruktur, in der Möglichkeit zur Beschichtung nahezu beliebiger nicht-planarer Flächen, im relativ geringen Energiebedarf und nicht zuletzt in der Kombinierbarkeit verschiedener Beschichtungsschritte zur Erzeugung von multifunktionellen Schichten, wie sie sich mit anderen bekannten Verfahren nicht oder mit kaum vertretbarem Aufwand realisieren lassen. Von daher erscheint es erstaunlich, dass der Herstellung von Solarabsorberschichten mittels Sol-Gel-Verfahren bis heute nur sehr wenig Aufmerksamkeit geschenkt worden ist.

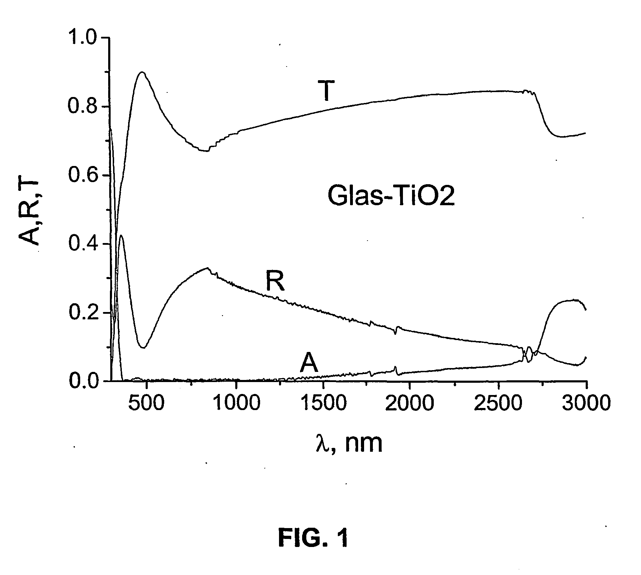

Einzige derzeit bekannte Ausnahme und damit zugleich nächstkommender Stand der Technik ist die Patentschrift DE-C2 101 21 812, die ein Verfahren zur Herstellung einer selektiven Absorberschicht durch Tauchbeschichtung schützt. Hierzu wird auf einem magnesiumhaltigen Aluminiumblech eine Titan enthaltende Oxidschicht gebildet, die so genannte selektiv absorbierende Strukturelemente enthalten soll. Leider ist aber aus der Druckschrift nicht klar ersichtlich, welcher Natur oder welchen Ursprungs diese "Strukturelemente" sein sollen. Dies führt zunächst zu dem Verdacht, dass konkret eine Titandioxid-Beschichtung des Substrats als Absorber gemeint sein könnte. Dein stünden allerdings experimentelle Befunde (vgl. auch Fig. 1) eindeutig entgegen. Somit bleibt anzunehmen, dass der konkrete Bezug auf das Mg-Al-Substrat hier erfindungswesentlich ist und eine Oxidation der Substratoberfläche selbst - vielleicht durch die Beimengungen von Salpetersäure? - herbeigeführt wird, um den beschriebenen Absorbereffekt zu erzielen. Wenn dies zutreffen sollte, hätte man es hier nicht mit einer klassischen Sol-Gel-Beschichtung, sondern mit einer chemischen Oberflächenbehandlung zu tun. Wie dem auch sei, die Lehre der DE-C2 101 21 812 gibt keinen Anlass zu glauben, dass es sich bei der dort beschriebenen Beschichtung um eine SolarabsorberBeschichtung für mehrere - oder gar weitgehend beliebige - Substrate handeln könnte.

Es ist somit die Aufgabe der Erfindung, ein Verfahren zur Herstellung einer für die - Solarthermie günstigen Absorberbeschichtung anzugeben, durch das sich die Schichten mit bekannten Sol-Gel-Beschichtungsverfahren (Sprühen, Tauchen, Schleudern) auf verschiedenen Substraten, insbesondere auf Kupfer, Aluminium, Edelstahl oder Glas, bilden lassen.

Die Aufgabe wird gelöst durch ein Verfahren zur Herstellung einer Solarabsorberbeschichtung mit den Merkmalen des Anspruches 1. Die Unteransprüche geben vorteilhafte Ausgestaltungen an.

Das erfindungsgemäße Verfahren besteht in der an sich bekannten, konventionellen Beschichtung eines Substrats mit einer Titandioxid-Schicht unter Verwendung einer Precursor-Lösung, die mit einem Sol-Gel-Prozess auf das Substrat gebracht und anschließend wärmebehandelt wird, nunmehr erweitert um zwei erfindungsgemäße Schritte:
- der Precursor-Lösung werden vor der Beschichtung Silber-Ionen (z.B. in Form von Silbernitrat-Lösung) beigemengt, derart dass der Massenanteil des Silbers in der später getrockneten TiO₂/Ag-Schicht zwischen 10 % und 80 %, besonders bevorzugt zwischen 50 % und 70 %, beträgt;
- das beschichtete Substrat wird während der gesamten Wärmebehandlung (Trocknung und Kristallisation) mit sichtbarem Licht beleuchtet (vorzugsweise mit einer Leistungsdichte im Bereich von 25 mW/cm² bis 70 mW/cm²).

Der Effekt dieser erfindungsgemäßen Maßnahmen besteht in einer erheblichen Steigerung des Absorptionsvermögens der Beschichtung für sichtbares Licht (ca. 400-700 nm) sowie für das sich anschließende Nahinfrarot-Spektrum mit dann abfallender Tendenz, d.h. in einem sehr breiten Spektralbereich, wobei der Effekt wesentlich von der verwendeten Silberkonzentration abhängt. Es wurden Experimente zu Schichten mit 10% bis 80 % Silbermassenanteil durchgeführt, wobei sich zeigte, dass der Bereich zwischen 50 % und 70 % besonders gute Ergebnisse liefert.

Die beschriebene Wirkung wird verdeutlicht durch die folgenden Figuren:
- Fig. 1: zeigt das Ergebnis einer photometrischen Messung für eine reine TiO₂-Schicht (Anatas-Phase, 100 nm dick) auf einem Glassubstrat mit Messwerten der Re- flektivität R, der Transmissivität T und des Absorptionsvermögens A;
- Fig. 2: zeigt zum Vergleich dieselbe Messung wie in Fig. 1 an einer TiO₂/Ag-Schicht (100 nm) mit 70 % Massenanteil Silber und pyrolysiert und kristallisiert unter Licht;
- Fig. 3: zeigt die Reflektionsmessung einer TiO₂/Ag-Schicht (100 nm) mit 70 % Mas- senanteil Silber auf einem Kupfersubstrat.

Eine reine Titandioxid-Schicht ist als Solarabsorber ungeeignet, wie aus Fig. 1 klar ersichtlich ist. Dargestellt sind Transmission-, Reflexions- und Absorptionsvermögen (T, R, A) einer mit 100 nm TiO₂ beschichteten Glasplatte. Die Glasplatte selbst wurde auch unbeschichtet vermessen, so dass die gezeigten Messwerte hiervon bereinigt und als Schichteigenschaften zu verstehen sind. Reines TiO₂ lässt bis etwa 2700 nm rund 80 % der eingestrahlten Lichtleistung durch und reflektiert den Rest. Die Absorption nimmt erst im Infraroten jenseits von 2700 nm Werte oberhalb von 10 % an.

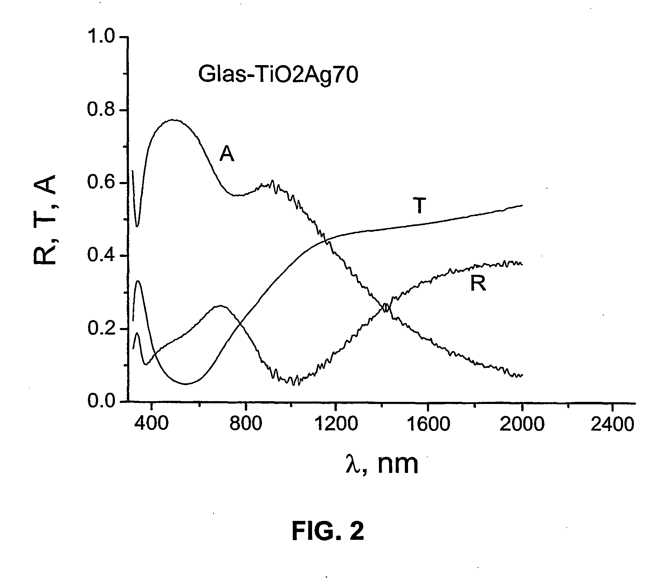

Eine gleiche Glasplatte wurde nach der erfindungsgemäßen Lehre mit einer 100 nm dicken Schicht TiO₂/Ag (70 % Silbermassenanteil) beschichtet und wie oben vermessen. Fig. 2 ist zu entnehmen, dass diese Schicht im sichtbaren Wellenlängenbereich (ca. 400-700 nm) gut 70-80 % des Lichts absorbiert, den Rest überwiegend reflektiert und nur wenig Licht durchlässt. Diese fundamental andersartige Verhalten im Vergleich zum reinen TiO₂ "normalisiert" sich dann ein wenig zu größeren Wellenlängen hin; bei 2000 nm findet man ein Verhältnis T:R:A von etwa 55:35:10 für die erfindungsgemäße Schicht gegenüber ungefähr 80:15:5 für TiO₂ (vgl. Fig. 1).

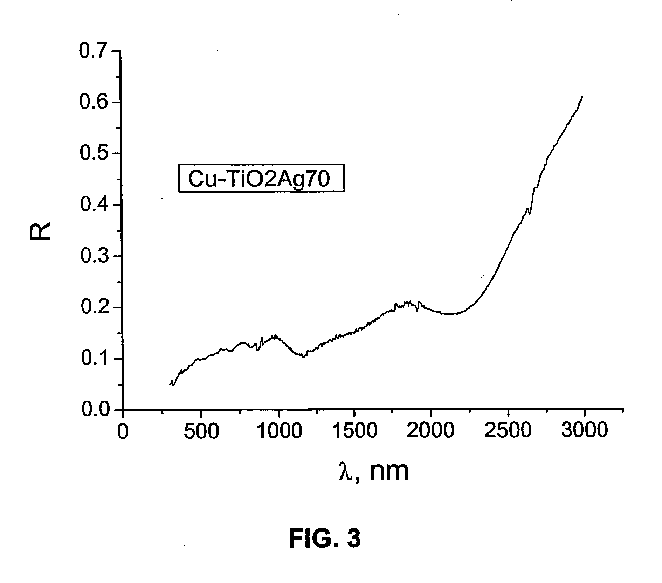

Bei der Anwendung der erfindungsgemäßen Beschichtungen in der Solarthermie sind diese üblich auf Metallbleche, insbesondere auf Kupfer, Aluminium und Edelstahl, aufzubringen. Dabei sollte für eine Stickstoffatmosphäre oder Formiergasatmosphäre gesorgt werden, da sonst die Werkstoffe oxidieren und eine gute Haftung beeinträchtigt sein könnte. Fig. 3 zeigt das Ergebnis einer Reflektivitätsmessung für eine 100 nm dicke TiO₂/Ag-Schicht (70% Silbermassenanteil) auf einem Kupferblech. Die Reflektivität liegt im sichtbaren Spektrum um oder sogar unter 10 % und steigt bis etwa 2300 nm nur langsam auf ca. 20 % an. Jenseits von 2300 nm zeigt die Reflektivität einen starken Anstieg auf etwa 60 % bei 3000 nm. Aus technischen Gründen (Limitierung des Messbereichs) konnte die Reflektivität noch nicht oberhalb von 3000 nm weiterverfolgt werden. Es deutet sich aber bereits klar an, dass z.B. erfindungsgemäß beschichtete Kupferbleche genau die geforderten Eigenschaften eines selektiven Solarabsorbers zeigen.

Bei Solarthermiebeschichtungen sind neben den optischen Eigenschaften auch noch die Haftung am Substrat sowie chemische und thermische Beständigkeit unter klimatischen Extremen (Bsp. Stillstand des Speichermediums bei intensiver Sonneneinstrahlung) von Bedeutung. Reines Titandioxid erfüllt diese Bedingungen hervorragend. Daran ändert sich wenig durch die Anreicherung mit Silber, allerdings ist die TiO₂-Ag-Kompositschicht antibakteriell und besitzt Antifouling-Eigenschaften. Dies kann als vorteilhafte Abwehr gegen den unerwünschten Bewuchs - z.B. mit Pilzkulturen - aufgefasst werden. Natürlich erlaubt das Sol-Gel-Verfahren wie die anderen bekannten Verfahren auch das Erzeugen einer tiefenabhängigen Materialverteilung, also etwa eines Silbergradienten bezüglich der Schichtdicke. Vorstellbar sind somit Absorberschichten, die unmittelbar über dem Metallsubstrat Licht absorbieren, wohingegen sie zur Schichtoberfläche hin immer weniger Silber aufweisen, so dass die Oberfläche selbst aus reinem TiO₂ besteht.

### Ausführungsbeispiel

### Herstellung der Sole

Zur Herstellung von 200 ml einer 0,6 molaren Lösung werden 20 ml 2-Methoxyethanol und Acetylaceton (Hacac) in einem Becherglas vorgelegt. Danach wird Titan-isopropoxid zugegeben. Das Gemisch lässt man 30 min rühren.

Als zweite Lösung werden 20 ml 2-Methoxyethanol mit Wasser gemischt. Nach 30 min Rühren wird die wasserhaltige Lösung zu dem Titan-Acetylaceton-Komplex gegeben, weitere 30 min rühren lassen.

Für die Silberlösung werden 20 ml 2-Methoxyethanol in einem Becherglas vorgelegt. Danach werden AgNO₃ und Pyridin dazugegeben, wonach man diesen Komplex ebenfalls 30 min rühren lässt. Danach kann die Silberlösung zu der stabilisierten und hydrolysierten Titanlösung zugegeben werden. Vorzugsweise werden dem Sol noch vier Gramm Polyethylenglycol 400 zur Verbesserung der Filmbildungseigenschaften zugegeben.

Nach 30-minütigem Rühren wird die Lösung mit 2-Methoxyethanol auf 200 ml aufgefüllt und anschließend gefiltert.

### Verwendete Stöchiometrien:

- Ti-isoprop. : Hacac : H₂O = 1 : 0,5 : 4 (mol)
- AgNO₃ : Pyridin = 1:115 (mol)

### Einwaagen für 200 ml Ansätze

| Ansatz | Ti-iso. /g | Hacac /g | H₂O /g | AgNO₃ /g | Pyridin /g |
|---|---|---|---|---|---|
| TiO₂ Ag30 | 24 | 4 | 6 | 4,6 | 30 |
| TiO₂ Ag50 | 24 | 4 | 6 | 10,7 | 6 |

### Herstellung der Beschichtungen

Die Herstellung der Proben erfolgt mittels Spincoating, Tauchbeschichten oder Sprühen. Generell sind die erzeugten Schichten 100 nm dick. Die Pyrolyse erfolgt bei 350 °C. Während der Pyrolyse müssen die Schichten ständig beleuchtet werden. Nach der Pyrolyse erscheinen die Proben deutlich dunkler im Vergleich zu unbelichteten Proben. Danach wird die Temperatur auf 500 °C erhöht und unter Licht wie oben für 30 Minuten kristallisiert. Durch die Beschränkung der Wärmebehandlung auf Temperaturen bis höchstens 500 °C wird sichergestellt, dass sich im Wesentlichen polykristallines TiO₂ in der Anatas-Phase bildet. Dies scheint für das hier beschriebene Verfahren besonders günstig zu sein.

Die Beleuchtung der Proben erfolgte in den Laborversuchen mittels konventioneller Glühbirnen (60 W, 100 W), wobei die Lampen auf die Proben gerichtet und in einem Abstand von ungefähr 10-20 cm angeordnet wurden. Die Lampen emittierten Licht im gesamten sichtbaren Spektrum und Wärmestrahlung. Es ist ebenfalls möglich, die Proben mit einem Laserstrahl zu beleuchten, vorzugsweise mit einem grünen Laser um 550 nm Wellenlänge. Durch Messung der eingestrahlten Lichtleistungsdichte am Ort der Probe wurde ermittelt, dass diese bevorzugt zwischen 25 und 70 mW/cm² eingerichtet werden sollte.

## Patentansprüche

1. Verfahren zur Herstellung einer Solarabsorberbeschichtung mit den Schritten: Beschichten eines Substrat mit einer Titan-Precursor-Lösung zur Erzeugung einer Titandioxid-Schicht nach der Sol-Gel-Technik und Wärmebehandlung des beschichteten Substrats zur Pyrolyse und Kristallisation der Schicht,
**dadurch gekennzeichnet, dass**
der Titan-Precursor-Lösung vor dem Beschichten Silber-Ionen in solcher Menge beigemischt werden, dass die wärmebehandelte Schicht einen Silber-Massenanteil zwischen 10 % und 80 % aufweist und
Pyrolyse und Kristallisation der Schicht unter Beleuchten der Schicht mit sichtbarem Licht erfolgen.

2. Verfahren nach Anspruch 1, **dadurch gekennzeichnet, dass** einzelne Schichten von etwa 100 Nanometer Dicke erzeugt werden.

3. Verfahren nach einem der vorangehenden Ansprüche, **dadurch gekennzeichnet, dass** der Silber-Massenanteil der wärmebehandelten Schicht zwischen 50 % und 70 % beträgt.

4. Verfahren nach einem der vorangehenden Ansprüche, **dadurch gekennzeichnet, dass** die Wärmebehandlung bei Temperaturen bis 500 °C erfolgt.

5. Verfahren nach einem der vorangehenden Ansprüche, **dadurch gekennzeichnet, dass** eine Mehrzahl von Schichten übereinander angeordnet wird, wobei sich die einzelnen Schichten im Silbergehalt unterscheiden.

6. Verfahren nach einem der vorangehenden Ansprüche, **dadurch gekennzeichnet, dass** die Beleuchtung der Schicht mit Glühlampen erfolgt.

7. Verfahren nach einem der vorangehenden Ansprüche, **dadurch gekennzeichnet, dass** die Beleuchtung der Schicht mit einer Lichtleistungsdichte zwischen 25 und 70 mW/cm² erfolgt.

8. Verfahren nach einem der vorangehenden Ansprüche, **dadurch gekennzeichnet, dass** die Schicht auf metallische Substrate aufgebracht und unter Stickstoff- oder Formiergasatmosphäre wärmebehandelt wird.

9. Verfahren nach Anspruch 8, **dadurch gekennzeichnet, dass** das metallische Substrat wenigstens eines der Metalle Kupfer, Aluminium oder Edelstahl enthält.

## Claims

1. A method of manufacturing a solar absorber coating, comprising the steps of: coating a substrate with a titanium precursor solution for generating a titanium dioxide layer according to the sol-gel technology, and heat treatment of the coated substrate for pyrolysis and crystallization of the layer,
**characterized in that**
prior to coating, silver ions are added to the titanium precursor solution in such an amount that the heat-treated layer comprises a mass fraction of silver of between 10% and 80%, and
pyrolysis and crystallization of the layer take place by irradiating the layer with visible light.

2. The method according to claim 1, **characterized in that** individual layers having a thickness of about 100 nanometers are generated.

3. The method according to any one of the preceding claims, **characterized in that** the mass fraction of silver in the heat-treated layer is between 50% and 70%.

4. The method according to any one of the preceding claims, **characterized in that** the heat treatment is performed at temperatures of up to 500°C.

5. The method according to any one of the preceding claims, **characterized in that** a plurality of layers is superposed, wherein the individual layers differ in silver content.

6. The method according to any one of the preceding claims, **characterized in that** the irradiation of the layer is performed by means of incandescent lamps.

7. The method according to any one of the preceding claims, **characterized in that** the irradiation of the layer is performed at a light power density of between 25 and 70 mW/cm².

8. The method according to any one of the preceding claims, **characterized in that** the layer is applied to metallic substrates and is heat-treated under nitrogen atmosphere or forming gas atmosphere.

9. The method according to claim 8, **characterized in that** the metallic substrate contains at least one of the metals copper, aluminum or stainless steel.

## Revendications

1. Procédé de fabrication d'un revêtement absorbeur solaire comportant les étapes suivantes : revêtement d'un substrat avec une solution précurseur de titane en vue de produire une couche de dioxyde de titane selon la technique sol-gel et traitement thermique du substrat revêtu en vue de réaliser la pyrolyse et la cristallisation de la couche,
**caractérisé en ce que**
des ions d'argent sont ajoutés à la solution précurseur de titane avant le revêtement dans une quantité telle que la couche traitée thermiquement présente une proportion massique d'argent comprise entre 10 % et 80 % et
la pyrolyse et la cristallisation de la couche se font en illuminant la couche avec une lumière visible.

2. Procédé selon la revendication 1, **caractérisé en ce que** des couches individuelles d'environ 100 nanomètres d'épaisseur sont produites.

3. Procédé selon l'une des revendications précédentes, **caractérisé en ce que** la proportion massique d'argent de la couche traitée thermiquement est comprise entre 50 % et 70 %.

4. Procédé selon l'une des revendications précédentes, **caractérisé en ce que** le traitement thermique se fait à des températures allant jusqu'à 500 °C.

5. Procédé selon l'une des revendications précédentes, **caractérisé en ce qu'**une pluralité de couches est superposée, les couches individuelles ayant une teneur en argent différente.

6. Procédé selon l'une des revendications précédentes, **caractérisé en ce que** l'illumination de la couche se fait avec des lampes à incandescence.

7. Procédé selon l'une des revendications précédentes, **caractérisé en ce que** l'illumination de la couche se fait avec une densité de puissance lumineuse comprise entre 25 et 70 mW/cm².

8. Procédé selon l'une des revendications précédentes, **caractérisé en ce que** la couche est appliquée sur des substrats métalliques et traitée thermiquement sous atmosphère d'azote ou de gaz de formation.

9. Procédé selon la revendication 8, **caractérisé en ce que** le substrat métallique contient au moins l'un des métaux suivants : cuivre, aluminium ou acier inoxydable.
